# EUROPÄISCHE PATENTSCHRIFT

(11) **EP 1 833 401 B1**
(45) Veröffentlichungstag und Bekanntmachung des Hinweises auf die Patenterteilung: **16.11.2011**
(21) Anmeldenummer: 05825996.1
(22) Anmeldetag: 23.12.2005
(51) Int. Cl.: A61C 1/00

(54) **MEDIZINTECHNISCHE GERÄTSCHAFT**
MEDICAL INSTRUMENT
APPAREIL MEDICAL

(30) Priorität: 30.12.2004 DE 202004020275 U
(43) Veröffentlichungstag der Anmeldung: 19.09.2007
(73) Patentinhaber: elexxion AG, 78315 Radolfzell (DE)
(72) Erfinder: Olaf Schäfer, 78224 Singen (DE)
(74) Vertreter: Weiss, Peter
(86) Internationale Anmeldenummer: PCT/EP2005/013953
(87) Internationale Veröffentlichungsnummer: WO 2006/072412

(56) Entgegenhaltungen:
- EP-A- 0 844 008
- DE-U1- 20 304 675
- US-A- 5 928 220

## Beschreibung

Die Erfindung betrifft eine medizintechnische Gerätschaft für Behandlungen im dentalen Bereich mittels eines Lasers mit zumindest zwei Lasermodulen mit unterschiedlichen Wellenlängen, die mit einer Steuerungselektronik verbunden sind, wobei zwischen der Steuerungselektronik und den Lasermodulen ein Umschalter angeordnet ist, über den die Steuerungselektronik mit dem einen oder dem anderen Lasermodul verbindbar ist.

### STAND DER TECHNIK

Eine derartige medizintechnische Gerätschaft ist beispielsweise aus der DE 102 25 749 A1 bekannt. Die beiden Lasermodule bilden zwei getrennte Quellen für Laserlicht mit unterschiedlicher Wellenlänge. Wird beispielsweise das erste Lasermodul benötigt, so wird das Programm in der Steuerungselektronik zum Starten der Tätigkeit dieses Lasermoduls gestartet. Wird dagegen ein Laserlicht mit einer Wellenlänge des zweiten Lasermoduls gewünscht, so muss das Programm für das ersten Lasermodul erst gestoppt und beendet werden, so dann erfolgt ein Starten des Programms des zweiten Lasermoduls. Dies benötigt erhebliche Zeit.

Weiterhin wird In der EP 0 844 008 A1 eine Vorrichtung zur Verwendung bei der Laserbehandlung von biologischem Gewebe beschrieben, bei welcher ein Laser mit zumindest zwei Lasermodulen mit unterschiedlichen Wellenlänge versehen ist, die mit einer Steuerungselektronik verbunden sind. Zwischen der Steuerungselektronik und den Lasermodulen ist ein Umschalter angeordnet, wodurch die Steuerungselektronik mit dem einen oder dem anderen Lasermodul verbunden werden kann. Es handelt sich hierbei um einen elektronischen Schalter, welcher durch ein Regelungssystem betätigt wird.

### AUFGABE

Aufgabe der vorliegende Erfindung ist es, die Handhabung der medizintechnischen Gerätschaft zu vereinfachen und zu beschleunigen.

### LÖSUNG DER AUFGABE

Zur Lösung der Aufgabe führt, dass der Umschalter eine Fusstaste ist oder dass dieser sprachgesteuert ist.

Der Umschalter an sich bewirkt, dass die Programme nicht erst beendet werden müssen, sondern lediglich in Wartestellung bleiben. D.h., es kann zwischen den einzelnen Lasermodulen hin und her geschaltet werden, ohne dass das Programm desjenigen Lasers, der gerade nicht benötigt wird, beendet werden muss. Hierdurch wird erhebliche Zeit eingespart.

Die Ausbildung des Umschalters als Fusstaste hat zur Folge, dass der Benutzer der medizintechnischen Gerätschaft seine Hände weiter zur Behandlung oder Untersuchung des Patienten frei hat, während er mit dem Fuss zwischen den einzelnen Lasermodulen hin und her schalten kann. Als Umschaltet bieten sich jedoch weitere Möglichkeiten an.

So ist erfindungsgemäß auch vorgesehen, ein Umschalten durch eine Sprachsteuerung zu ermöglichen, die auf einen bestimmten Befehl reagiert. Für diese Möglichkeit wird separat Schutz begehrt.

Weiterhin ist denkbar, dass der Umschalter an dem Handstück, aus dem das Laserlicht ausgebracht wird, angeordnet ist. Diese Möglichkeit ist jedoch nicht Teil der Erfindung. Wenn dies in der Nähe der Finger geschieht, kann auf diese Art und Weise ebenfalls leicht zwischen den beiden Lasermodulen hin und her geschaltet werden. Dabei ist es gleichgültig, ob in dem Handstück nur ein Lichtleiter für beide Lasermodule oder zwei getrennte Lichtleiter oder gar zwei getrennte Handstücke vorgesehen sind.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in ihrer einzigen Figur eine blockschaltbildliche Draufsicht auf einen Teil der erfindungsgemässen medizinischen Gerätschaft für Behandlungen von dentalen Bereichen mittels eines Lasers.

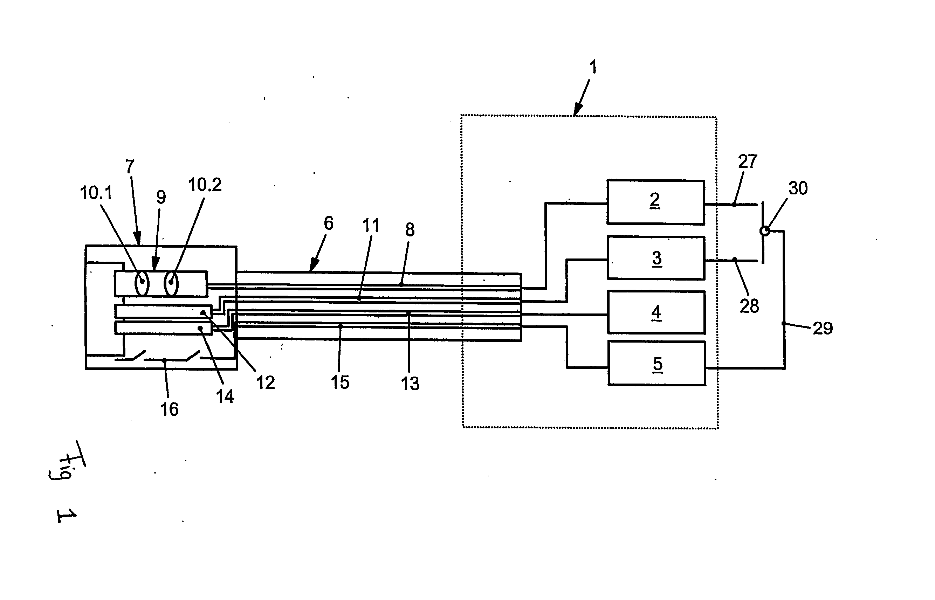

Gemäss der Figur 1 befinden sich in einem Basisgerät 1 ein Lasermodul 2 eines Diodenlasers und ein Lasermodul 3 eines Erbium: YAG-Lasers. Ferner ist eine Quelle 4 für ein Kühlmittel sowie eine Steuerungselektronik 5 vorgesehen.

Das Basisgerät 1 steht über eine Gemeinschaftsleitung 6 mit einem Rückteil 7 in Verbindung. Das Dioden-Lasermodul 2 ist über eine Verbindungsleitung 8 mit einem optischen Element 9 verbunden, in das zwei Linsen 10.1 und 10.2 eingebaut sind.

Das Erbium: YAG-Lasermodul 3 steht über eine Verbindungsleitung 11 mit einem Hohlleiter 12 in Verbindung, der bevorzugt ein Edelstahlrohr aufweist, in dem das Laserlicht reflektiert wird.

Eine Verbindungsleitung 13 von der Quelle 4 für Kühlmittel mündet in ein Übertragungsstück 14. Eine Verbindungsleitung 15 von der Steuerungselektronik 5 steht mit Schaltelementen 16 für die Funktionsauswahl in Verbindung.

Die Lasermodule 2 und 3 sind über Anschlussleitungen 27 bzw. 28 und 29 mit der Steuerungselektronik 5 verbindbar. Dies geschieht erfindungsgemäss über einen Umschalter 30. Der Umschalter 30 ist so ausgelegt, dass er die Steuerungselektronik 5 entweder mit dem Lasermodul 2 oder mit dem Lasermodul 3 verbindet.

**Positionszahlenliste**

| | | | | | |
|---|---|---|---|---|---|
| 1 | Basisgerät | 34 | | 67 | |
| 2 | Dioden-Lasermodul | 35 | | 68 | |
| 3 | Erbium:YAG-Lasermodul | 36 | | 69 | |
| 4 | Quelle für Kühlmittel | 37 | | 70 | |
| 5 | Steuerungselektronik | 38 | | 71 | |
| 6 | Gemeinschaftsleitung | 39 | | 72 | |
| 7 | Rückteil | 40 | | 73 | |
| 8 | Verbindungsleitung | 41 | | 74 | |
| 9 | optisches Element | 42 | | 75 | |
| 10 | Linsen | 43 | | 76 | |
| 11 | Verbindungsleitung | 44 | | 77 | |
| 12 | Hohlleiter | 45 | | 78 | |
| 13 | Verbindungsleitung | 46 | | 79 | |
| 14 | Übertragungsstück | 47 | | | |
| 15 | Verbindungsleitung | 48 | | | |
| 16 | Schaltelemente | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | Anschlussleitung | 60 | | | |
| 28 | Anschlussleitung | 61 | | | |
| 29 | Anschlussleitung | 62 | | | |
| 30 | Umschalter | 63 | | | |
| 31 | | 64 | | | |
| 32 | | 65 | | | |
| 33 | | 66 | | | |

## Patentansprüche

1. Medizintechnische Gerätschaft für Behandlungen im dentalen Bereich mittels eines Lasers mit zumindest zwei Lasermodulen (2, 3) mit unterschiedlichen Wellenlängen, die mit einer Steuerungselektronik (5) verbunden sind, wobei zwischen der Steuerungselektronik (5) und den Lasermodulen (2, 3) ein Umschalter (30) angeordnet ist, Ober den die Steuerungselektronik (5) mit dem einen oder dem anderen Lasermodul verbindbar ist,
**dadurch gekennzeichnet,**
**dass** der Umschalter (30) eine Fusstaste ist

2. Medizintechnische Gerätschaft für Behandlungen im dentalen Bereich mittels eines Lasers mit zumindest zwei Lasermodulen (2, 3) mit unterschiedlichen Wellenlängen, die mit einer Steuerungselektronik (5) verbunden sind, wobei zwischen der Steuerungselektronik (5) und den Lasermodulen (2, 3) ein Umschalter (30) angeordnet ist, über den die Steuerungselektronik (5) mit dem einen oder dem anderen Lasermodul verbindbar ist, **dadurch gekennzeichnet, dass** der Umschalter (30) sprachgesteuert ist,

## Claims

1. A medical instrument for treatment in the dental field by means of a laser, with at least two laser modules (2, 3) having different wavelengths which are connected to control electronics (5), with a changeover switch (30) being arranged between the control electronics (5) and the laser modules (2, 3), via which changeover switch the control electronics (5) can be connected to one or the other laser module,
**characterised in that**
the changeover switch (30) is a foot switch.

2. A medical instrument for treatment in the dental field by means of a laser, with at least two laser modules (2, 3) having different wavelengths which are connected to control electronics (5), with a changeover switch (30) being arranged between the control electronics (5) and the laser modules (2, 3), via which changeover switch the control electronics (5) can be connected to one or the other laser module, **characterised in that** the changeover switch (30) is voice-controlled.

## Revendications

1. Instrument de technologie médicale pour traitements dans la région dentale par le biais d'un laser avec au moins deux modules de laser (2, 3) ayant des longueurs d'onde différentes, qui sont liés à une électronique de commande (5), un commutateur (30) étant placé entre les deux modules de laser (2, 3) à travers lequel l'électronique de commande (5) peut être liée à l'un ou l'autre module de laser,
**caractérisé en ce que**
le commutateur (30) est un commutateur à pédale.

2. Instrument de technologie médicale pour traitements dans la région dentale par le biais d'un laser avec au moins deux modules de laser (2, 3) ayant des longueurs d'onde différentes, qui sont liés à une électronique de commande (5), un commutateur (30) étant placé entre les deux modules de laser (2, 3) à travers lequel l'électronique de commande (5) peut être liée à l'un ou l'autre module de laser, **caractérisé en ce que** le commutateur (30) est commandé par reconnaissance vocale.
